# FASCICULE DE BREVET EUROPEEN

(11) **EP 2 079 649 B1**
(45) Date de publication et mention de la délivrance du brevet: **12.08.2015**
(21) Numéro de dépôt: 07858679.9
(22) Date de dépôt: 09.11.2007
(51) Int. Cl.: B65G 25/06

(54) **PROCEDE DE MANOEUVRE D'UN DISPOSITIF DE TRANSFERT DE CHARGES A FOND MOUVANT ET DISPOSITIF ASSOCIE**
VERFAHREN FÜR DEN BETRIEB EINER LASTTRANSPORTVORRICHTUNG MIT BEWEGLICHEM BODEN UND ENTSPRECHENDE VORRICHTUNG
METHOD OF OPERATING A MOVING-FLOOR LOAD-TRANSFER DEVICE, AND ASSOCIATED DEVICE

(30) Priorité: 10.11.2006 FR 0654839
(43) Date de publication de la demande: 22.07.2009
(73) Titulaire: La Mecanique Et Ses Applications - Atelier P. Vergnaud, 24580 Rouffignac Saint Cernin De Reilhac (FR)
(72) Inventeur: VERGNAUD, Philippe, 24580 Rouffignac Saint-cernin De Reilhac (FR)
(74) Mandataire: Fantin, Laurent
(86) Numéro de dépôt international: PCT/FR2007/052318
(87) Numéro de publication internationale: WO 2008/056089

(56) Documents cités:
- WO-A-88/03113
- FR-A1- 2 808 516
- US-A1- 5 340 264

## Description

La présente invention concerne un procédé de manoeuvre d'un dispositif de transfert de charges à fond mouvant et couvre aussi le dispositif associé.

Dans de nombreux domaines, il est nécessaire de déplacer des charges sans que des moyens de manutention soient disponibles.

Ainsi, les usines de recyclage de déchets peuvent avoir des besoins d'alimentation de certains postes avec des produits en vrac provenant de trémies de déchargement ou encore de trémies de produits triés.

Dans certains cas, les charges lourdes doivent être manutentionnées et la surface de transfert doit être rigide.

Une autre application concerne les bennes de camion contenant des produits en vrac comme des enrobés. Les remorques ne sont pas nécessairement basculantes surtout lorsqu'elles sont de grande longueur et il faut pouvoir évacuer l'intégralité du contenu du camion.

De même, pour déplacer des charges sur palettes contenues dans un camion vers un quai de chargement/déchargement un fond mouvant est extrêmement utile. Ce fond mouvant permet de transférer les palettes au fur et à mesure de l'avant vers l'arrière de la remorque et les mettre à disposition au droit du quai de chargement/déchargement ou inversement, ce qui rend très rapides les opérations et limite l'immobilisation du camion.

Les fonds mouvants peuvent avoir aussi une double fonction car en plus de déplacer, l'espace entre les barres de transfert peut assurer une fonction de criblage. Les produits de dimensions inférieures à l'espacement entre les barres tombent dessous, le seuil de refus de criblage étant ainsi déterminé.

Si les fonds mouvants sont bien connus, ils présentent néanmoins quelques inconvénients que le dispositif de fond mouvant selon la présente invention se propose de résoudre.

En effet, un fond mouvant comprend de façon générale des groupes de barres mobiles en translation de façon synchrone dans le sens de déplacement. Dans le sens opposé au déplacement, les groupes de barres sont mobiles en translation de façon successive.

Des moyens moteurs assurent les déplacements de ces barres, généralement des vérins hydrauliques.

Ainsi, tous les groupes se déplacent simultanément dans le même sens d'avancement, ce qui entraîne la charge supportée. Ensuite, les groupes sont retirés un à un si bien que la charge reste immobile après le déplacement car elle repose sur un plus grand nombre de barres statiques que de barres mobiles.

Les déplacements requièrent une puissance relativement peu élevée comparée à la charge puisque le poids est repris sur les barres qui sont sur des supports adaptés et qu'il faut fournir de l'énergie sensiblement uniquement que pour la translation.

Néanmoins, on constate que le déplacement des groupes de barres n'est pas toujours synchrone, car les efforts exercés par la charge sur les barres n'est pas équi-réparti sur toutes les barres dans la plupart des cas et seules les barres chargées assurent un déplacement.

Le fait de ne pas être synchrone a pour effet de décompacter la charge transportée qui, au lieu de se comporter comme un solide unique, se comporte comme des charges ponctuelles dont les surfaces de contact avec le plancher peuvent prendre appui sur une seule barre ce qui engendre des mouvements parasites à contre sens, lors du retrait de la barre considérée, la conséquence étant le ralentissement de l'ensemble de la cargaison.

Bien sûr, les groupes de barres sont alternés pour limiter les effets mais sans y parvenir de façon satisfaisante.

Ceci a pour conséquence d'orienter la charge différemment et de conduire à des mises en travers par exemple dans le cas de charges palettisées ce qui est préjudiciable. Pour le transfert de matières en vrac, ceci conduit à des alimentations discontinues ou irrégulières et à une diminution de la vitesse d'avancement.

Si une charge sur palettes se met en travers dans une remorque, cela occasionne des difficultés de chargement ou de déchargement au lieu de les faciliter.

Un autre point négatif des dispositifs de l'art antérieur est le retrait des barres.

En effet, dans certains cas, les premières barres retirées supportent une très grande part de la charge et la retenue de la charge par les barres statiques est insuffisante.

De nouveau, il se pose des problèmes de qualité de transfert.

US-A-5340264 décrit un procédé et un dispositif selon les préambules des revendications 1 et 3. Le procédé et le dispositif à fond mouvant selon les revendications 1 et 3 visent à pallier les problèmes de ceux de l'art antérieur en permettant un transfert régulier, en ligne. De plus, le dispositif garantit un retrait de barres sans mouvement de la charge.

L'agencement proposé est également industriel à savoir, une fiabilité éprouvée avec des mécanismes peu gourmands en pièces mobiles, une forte limitation des frottements d'où un minimum de pertes d'énergie, une protection des organes les plus sensibles et une adaptabilité des barres en fonction des besoins.

Le dispositif à fond mouvant selon l'invention est maintenant décrit en détail, selon un mode de réalisation particulier et optimisé, sans qu'il puisse être considéré comme limitatif.

Cette description est établie en s'appuyant sur les dessins annexés sur lesquels les différentes figures représentent :
- figure 1 : une vue en perspective détaillée, avec des arrachements partiels, du dispositif de fond mouvant selon l'invention,
- figure 2 : une vue de détail de l'extrémité des barres et du châssis,
- figure 3 : une vue schématique des moyens moteurs, et
- figures 4A à 4D : un synoptique de fonctionnement du dispositif à fond mouvant selon l'invention.

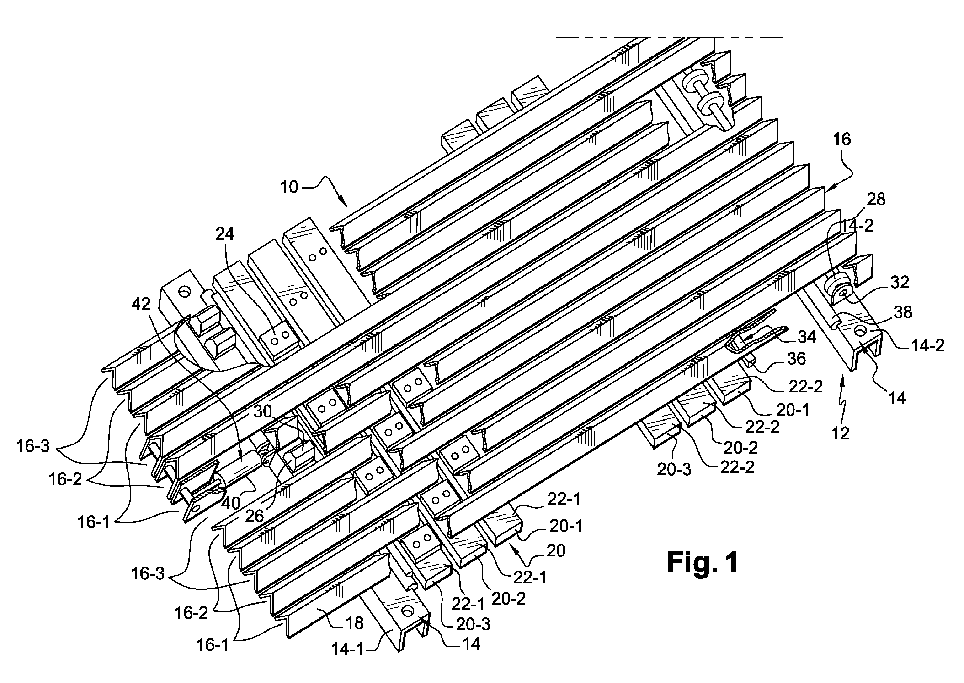

Sur la figure 1, on a représenté les éléments essentiels du fond mouvant 10 selon l'invention, de façon isolée, sans les périphériques.

Ce fond mouvant 10 comprend un châssis 12 fixe destiné à être rapporté en tout lieu nécessitant un fond mouvant tel qu'un sol d'usine, une plate-forme de machine ou un plateau de remorque.

Ce châssis 12 comprend en l'occurrence au moins deux poutres 14 qui seules sont représentées et référencées 14-1 et 14-2.

Ce châssis 12 est destiné à recevoir des jeux 16 de barres, en l'occurrence 3 jeux 16-1 à 16-3 de barres comportant chacun quatre barres 18.

Les quatre barres 18 de chaque jeu 16-1 à 16-3 de barres sont reliées par un ensemble 20 de traverses 22, dans ce cas trois ensembles 20-1 à 20-3. Dans le mode de réalisation retenu, chaque ensemble 20-1 à 20-3 de traverses comprend deux traverses 22-1 et 22-2.

La fixation est réalisée à l'aide d'inserts 24 solidaires des barres 18, par exemple par soudage, et ces inserts sont rapportés sur les traverses 22 par exemple au moyen de vis de façon à pouvoir changer les jeux de barres, si nécessaire comme indiqué plus avant.

Chaque barre 18 repose sur un plot 26 solidaire de la première poutre 14-1 et sur un galet 28 de roulement solidaire de la seconde poutre 14-2.

Ainsi, dans le mode de réalisation retenu, la première poutre 14-1 porte douze plots 26 et la seconde poutre 14-2 porte douze galets 28.

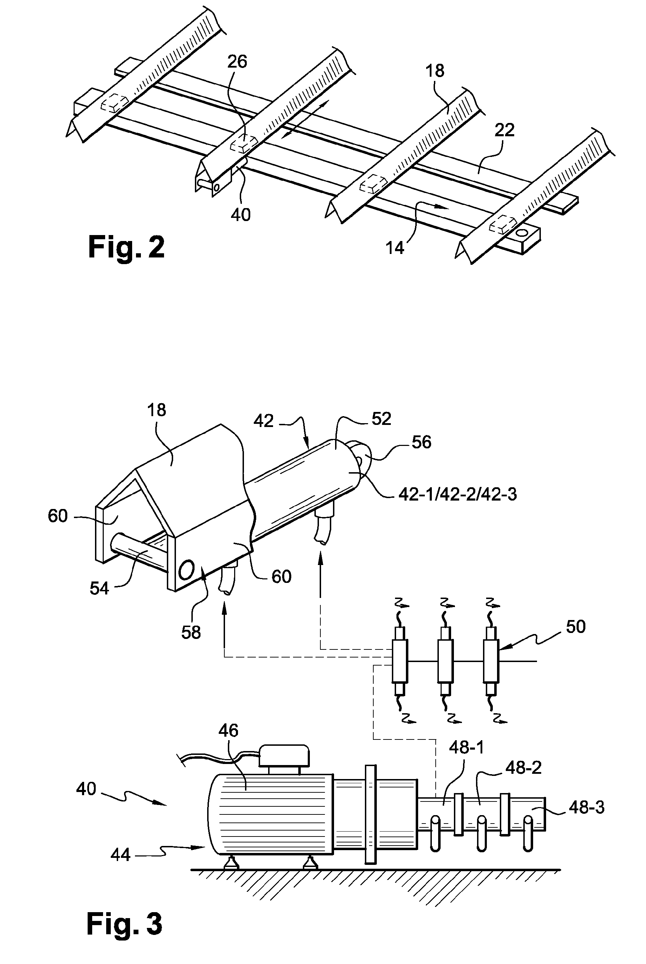

Le mode préférentiel de réalisation retenu prévoit des plots 26 rapportés à l'aide d'un seul point 30 de fixation de façon à générer une possibilité d'auto orientation en fonction des jeux, dilatations, charges et de tout autre facteur influant sur le guidage. Ces plots ont une section adaptée pour coopérer avec la section des barres. Sur les figures 1 et 2, les barres ont une section en Vé renversé et les plots ont une section parallélépipédique tronquée.

Les galets 28 sont avantageusement montés à rotation sur une même barre supportée par la poutre 14-2 grâce à des chapes 32 réparties de façon adaptée. Il est également prévu des moyens 34 monte et baisse de fin de course, dans les deux sens.

Ces moyens 34 monte et baisse comprennent des butées 36 élévatrices, solidaires de chaque barre 18 et une portée 38 adaptée pour recevoir lesdites butées élévatrices solidaires de l'arête de la poutre 14. Cet agencement se retrouve de chaque côté du fond mouvant.

Les butées 36 peuvent se présenter avec une section quart de rond ou triangulaire par exemple et la portée 38 peut prendre la forme d'une barre fixe ou mobile en rotation.

Le dispositif de fond mouvant selon l'invention comprend également des moyens 40 de manoeuvre des jeux 16-1 à 16-3 de barres 18 liées par les traverses 22. Les moyens 40 de manoeuvre sont des vérins 42 hydrauliques dans le mode de réalisation retenu, donc un vérin 42-1, 42-2 et 42-3 par jeu de barres.

Ces vérins sont préférentiellement du type double-effet. Bien entendu, il est possible d'utiliser de façon totalement équivalente deux vérins, un pour chacun des sens, mais ceci est généralement plus encombrant

L'alimentation de ces vérins en fluide hydraulique est assurée par une centrale 44 hydraulique. Dans l'art antérieur, tous les vérins sont alimentés à travers un distributeur par une pompe unique entraînée par un moteur si bien que tous les vérins reçoivent une même pression. De fait, suivant la charge des barres entraînées par les vérins, il se produit des différentiels de courses, les vérins correspondant aux barres les moins freinées se déplaçant plus vite que les vérins correspondant aux barres les plus chargées.

Le procédé selon l'invention consiste, pour le déplacement positif visant à faire avancer une charge *C*, à alimenter tous les vérins simultanément, avec un débit identique. Par contre, la valeur du débit peut, elle, varier.

Dans le dispositif de fond mouvant selon l'invention, ainsi que représenté sur la figure 3, la centrale 44 hydraulique comprend un moteur 46 unique, électrique dans ce cas, qui entraîne simultanément toutes les pompes, une par vérin, en l'occurrence trois pompes, 48-1, 48-2, 48-3 identiques de même cylindrée. Ainsi, les pompes sont couplées sur un même arbre et sont à cylindrée fixe, donc induisant des débits identiques. La valeur du débit identique de chacune de ces trois pompe est quant à elle proportionnelle à la vitesse de rotation dudit arbre. De fait, la centrale 44 hydraulique travaille à débit identique dans chaque vérin ce qui interdit tout différentiel de course. Si un des vérins doit générer un effort plus important, la pompe correspondante sera sollicitée mais le moteur aussi, si bien les deux autres pompes, calées à la même vitesse de rotation et liées à la troisième provoqueront le même déplacement en injectant le même débit de fluide hydraulique dans les autres vérins.

Il est bien sûr nécessaire d'adjoindre un distributeur 50 par vérin qui permet d'inverser le mouvement des vérins double effet et de les mettre en service sur commande.

Pour le pilotage du distributeur, il existe deux solutions.

La première solution consiste à utiliser des détecteurs de fin de course disposés sur les barres qui permettent d'exciter les bobines des distributeurs lors des fins de course dans l'ordre recherché pour obtenir le déplacement de la charge dans un sens ou dans l'autre sens.

La seconde solution consiste à recourir à un automate programmable susceptible d'élargir les possibilités, de gérer directement les courses, les vitesses de déplacement.

A cet effet, un moteur électrique à vitesse variable muni d'un variateur, permet la variation du débit avec des pompes à cylindrée fixe, ce qui apporte cette souplesse notamment en combinaison avec ledit automate.

Sur la figure 3, on a représenté un vérin 42 dont le corps 52 et la tige 54 sont positionnés sous une des barres 18 d'un jeu de barres 16-1 à 16-3.

Le corps 52 est monté articulé grâce à une chape 56 par rapport à la première poutre 14-1 et la tige 54 est montée articulée par rapport à la barre 18 grâce à une chape 58 constituée d'ailes 60 rapportées sous ladite barre.

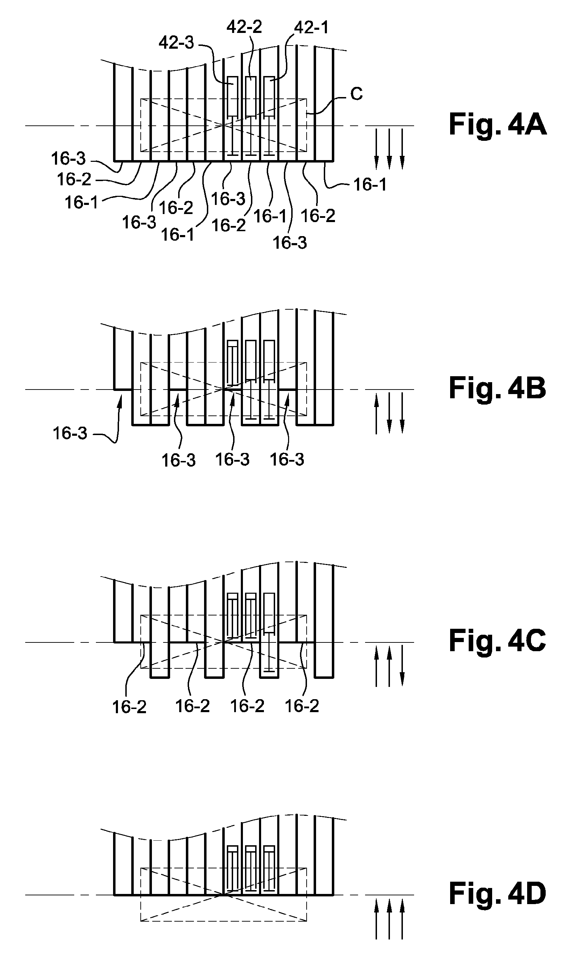

Sur les figures 4A à 4D, on a représenté une charge *C* disposée sur le fond mouvant de façon à décrire le synoptique de fonctionnement.

Sur la figure 4A, l'ensemble des barres 18 avance simultanément et à la même vitesse puisque les vérins 42-1, 42-2, 42-3 reçoivent les mêmes débits bien que certaines barres reçoivent plus ou moins de poids ou d'effort.

La charge C avance de la course des vérins.

En arrivant en bout de course, les moyens 34 monte et baisse assurent une élévation simultanée de toutes les barres 18 de quelques millimètres, 1 à 20 millimètres pour donner un ordre d'idées.

En effet, les butées 36 élévatrices, solidaires de chaque barre 18, montent sur les portées 38.

Sur la figure 4B, un des vérins 42-3 double effet, alimenté grâce à son distributeur dans la chambre opposée, assure le rappel en arrière d'un jeu 16-3 de barres qui, simultanément, descend. De fait, la charge *C* reste en appui sur les barres des deux autres jeux 16-2 et 16-1 de barres. Quand le jeu 16-3 de barres arrive en fin de course de rappel, la butée 36 élévatrice venant en appui sur la portée 38, le jeu 16-3 de barres reprend de nouveau la charge *C*.

Sur la figure 4C, un deuxième vérin 42-2, alimenté grâce à son distributeur dans la chambre opposée assure le rappel en arrière d'un deuxième jeu 16-2 de barres qui, simultanément, descend. De fait, la charge *C* reste en appui sur les barres du dernier jeu 16-1 de barres. Quand le jeu 16-2 de barres arrive en fin de course de rappel, la butée 36 élévatrice venant en appui sur la portée 38, le jeu 16-2 de barres reprend de nouveau la charge *C* comme le jeu 16-3.

Sur la figure 4D, le troisième jeu 16-1 de barres est à son tour ramené en position arrière, laissant la charge *C* en place. Quand le jeu 16-1 de barres arrive en fin de course de rappel, la butée 36 élévatrice venant en appui sur la portée 38, le jeu 16-1 de barres reprend de nouveau la charge *C* comme les jeux 16-2 et 16-3.

La charge *C* est de nouveau en appui sur les barres des trois jeux de barres, prête à subir une nouvelle avance.

La description a été réalisée sur la base de trois jeux de barres mais des essais montrent également que deux jeux de barres permettent d'obtenir un résultat tout à fait satisfaisant, de façon surprenante.

Le nombre de barres par jeu de barres dépend de la largeur du fond mouvant et des caractéristiques mécaniques nécessaires. Si le nombre de barres devient trop important, il est possible de multiplier les jeux de barres.

De même, en fonction des charges et donc des applications, le fond mouvant selon l'invention peut recevoir des barres de différentes sections.

## Revendications

1. Procédé de manoeuvre d'un dispositif de transfert de charges à fond mouvant comprenant au moins deux jeux (16-1,16-2,16-3) de barres (18) mobiles en translation de façon synchrone dans le sens de déplacement, et mobiles en translation de façon successive dans le sens opposé au déplacement, des moyens (40) de manoeuvre de ces jeux de barres à vérins (42-1,42-2,42-3) hydrauliques, **caractérisé en ce qu'**il est prévu des pompes (48-1,48-2,48-3) d'alimentation des vérins, une pompe par vérin, pour alimenter simultanément lesdits vérins (42-1,42-2,42-3) avec un débit de fluide hydraulique identique de façon à faire déplacer les jeux (16-1,16-2,16-3) de barres (18) simultanément.

2. Procédé de manoeuvre d'un dispositif de transfert de charges à fond mouvant selon la revendication 1, **caractérisé en ce que** l'on fait varier la valeur du débit simultané de fluide hydraulique, de façon à faire varier la vitesse de déplacement des jeux de barres.

3. Dispositif de transfert de charges à fond mouvant pour la mise en oeuvre du procédé selon la revendication 1 ou 2, comprenant au moins deux jeux (16-1,16-2,16-3) de barres (18) mobiles en translation de façon synchrone dans le sens de déplacement, et mobiles en translation de façon successive dans le sens opposé au déplacement, des moyens (40) de manoeuvre de ces jeux de barres à vérins (42-1,42-2,42-3) hydrauliques, **caractérisé en ce que** ces moyens (40) de manoeuvre comprennent au moins un vérin (42-1, 42-2,42-3) hydraulique par jeu de barres, une centrale (44) hydraulique composée d'un moteur (46) unique, une pompe (48-1,48-2,48-3) par vérin, ces vérins étant de cylindrées identiques et entraînés de façon synchrone par ledit moteur ainsi qu'un distributeur (50) interposé entre chaque vérin et chaque pompe.

4. Dispositif de transfert de charges à fond mouvant selon la revendication 3, **caractérisé en ce que** les pompes (48-1,48-2,48-3) sont couplées et entraînées par un même arbre.

5. Dispositif de transfert de charges à fond mouvant selon la revendication 3 ou 4, **caractérisé en ce qu'**il comprend des moyens (34) monte et baisse de fin de course, dans les deux sens.

6. Dispositif de transfert de charges à fond mouvant selon la revendication 5, **caractérisé en ce que** les moyens (34) monte et baisse de fin de course comprennent des butées (30) élévatrices, solidaires de chaque barre (18) et une portée (38) adaptée pour recevoir lesdites butées élévatrices.

7. Dispositif de transfert de charges à fond mouvant selon la revendication 6, **caractérisé en ce que** les butées (36) ont une section quart de rond ou triangulaire et la portée (38) est une barre fixe ou mobile en rotation.

8. Dispositif de transfert de charges à fond mouvant selon l'une des revendications 3 à 7, **caractérisé en ce qu** il comprend un châssis (12) avec des poutres (14) destiné à recevoir des jeux (16) de barres (18), les barres (18) de chaque jeu étant reliées par un ensemble (20) de traverses (22), chaque barre (18) reposant sur un plot (26) solidaire d'une poutre (14) et sur un galet (28) de roulement solidaire d'une autre poutre (14).

9. Dispositif de transfert de charges à fond mouvant selon la revendication 8, **caractérisé en ce que** chaque plot (26) est rapporté à l'aide d'un seul point (30) de fixation de façon à générer une possibilité d'auto orientation.

10. Dispositif de transfert de charges à fond mouvant selon la revendication 9, **caractérisé en ce que** les barres (18) ont une section en Vé renversé et les plots (26) ont une section parallélépipédique tronquée.

## Patentansprüche

1. Verfahren für den Betrieb einer Lasttransportvorrichtung mit beweglichem Boden, mit wenigstens zwei Gruppen (16-1, 16-2, 16-3) von Holmen (18), die in eine Verschieberichtung synchron verschiebbar sind und die in eine der Verschieberichtung entgegengesetzte Richtung nacheinander verschiebbar sind, und mit Antriebsmitteln (40) für die Gruppen der Holme mit hydraulischen Zylindern (42-1, 42-2, 42-3), **dadurch gekennzeichnet, dass** Pumpen (48-1, 48-2, 48-3) für die Beaufschlagung der Zylinder vorgesehen sind, jeweils eine Pumpe pro Zylinder, um die Zylinder (42-1, 42-2, 42-3) gleichzeitig mit dem identischen Durchsatz an Druckflüssigkeit derart zu beaufschlagen, dass die Gruppen (16-1, 16-2, 16-3) von Holmen (18) gleichzeitig verschoben werden.

2. Verfahren für den Betrieb einer Lasttransportvorrichtung mit beweglichem Boden nach Anspruch 1, **dadurch gekennzeichnet, dass** der Wert des gleichzeitigen Durchsatzes an Druckflüssigkeit geändert wird, um die Verschiebegeschwindigkeit der Gruppen von Holmen zu ändern.

3. Vorrichtung für den Betrieb einer Lasttransportvorrichtung mit beweglichem Boden für die Ausführung des Verfahrens nach Anspruch 1 oder 2, mit wenigstens zwei Gruppen (16-1, 16-2, 16-3) von Holmen (18), die in eine Verschieberichtung synchron verschiebbar sind und die in eine der Verschieberichtung entgegengesetzte Richtung nacheinander verschiebbar sind, und mit Antriebsmitteln (40) der Gruppen von Holmen mit hydraulischen Zylindern (42-1, 42-2, 42-3), **dadurch gekennzeichnet, dass** die Antriebsmittel (40) wenigstens einen hydraulischen Zylinder (42-1, 42-2, 42-3) pro Gruppe von Holmen und eine hydraulische Zentrale (44) umfassen, die sich aus einem einzelnen Motor (46) zusammensetzt, und eine Pumpe (48-1, 48-2, 48-3) pro Zylinder aufweisen, wobei die Zylinder identische Hohlräume haben und auf synchrone Weise durch den Motor angetrieben sind, ebenso wie einen Verteiler (50) der zwischen jedem Zylinder und jeder Pumpe angeordnet ist.

4. Lasttransportvorrichtung mit beweglichem Boden nach Anspruch 3, **dadurch gekennzeichnet, dass** die Pumpen (48-1, 48-2, 48-3) gekoppelt sind und durch die gleiche Welle angetrieben sind.

5. Lasttransportvorrichtung mit beweglichem Boden nach Anspruch 3 oder 4, **dadurch gekennzeichnet, dass** diese in beide Richtungen Mittel (34) zum Anheben und Absenken am Ende der Bewegung aufweist.

6. Lasttransportvorrichtung mit beweglichem Boden nach Anspruch 5, **dadurch gekennzeichnet, dass** die Mittel (34) zum Anheben und Absenken am Ende der Bewegung an jedem Holm (18) angebrachte Hubanschläge (30) und zur Aufnahme der Hubanschläge eingerichtete Auflagen (38) aufweisen.

7. Lasttransportvorrichtung mit beweglichem Boden nach Anspruch 6, **dadurch gekennzeichnet, dass** die Anschläge (36) einen viertelkreisförmigen oder dreiecksförmigen Querschnitt aufweisen und dass die Auflage (38) eine feste oder drehbare Stange ist.

8. Lasttransportvorrichtung mit beweglichem Boden nach einem der Ansprüche 3 bis 7, **dadurch gekennzeichnet, dass** diese ein Gestell (12) mit Trägern (14) aufweist, die dazu bestimmt sind, die Gruppen (16) von Holmen (18) aufzunehmen, wobei die Holme (18) von jeder Gruppe durch eine Gesamtheit (20) von Querbalken (22) verbunden sind, wobei jeder Holm (18) auf einem Klotz (26) lagert, der auf einem Träger (14) angebracht ist, und auf einer drehbaren Rolle (28), die an einem anderen Balken (14) angebracht ist.

9. Lasttransportvorrichtung mit beweglichem Boden nach Anspruch 8, **dadurch gekennzeichnet, dass** jeder Klotz (26) mittels eines einzelnen Befestigungspunkts (30) angebracht ist, um eine Selbstausrichtung zu ermöglichen.

10. Lasttransportvorrichtung mit beweglichem Boden nach Anspruch 9, **dadurch gekennzeichnet, dass** die Holme (18) einen Querschnitt eines umgekehrten V aufweisen und die Klötze (26) einen Querschnitt eines abgeschnittenen Parallelepipeds haben.

## Claims

1. A method for manoeuvring a load-transfer device with a moving base comprising at least two sets (16-1, 16-2, 16-3) of bars (18) able to move in translation synchronously in the direction of travel, and able to move in translation successively in the opposite direction to the travel, means (40) for manoeuvring these sets of bars with hydraulic actuators (42-1, 42-2, 42-3), **characterised in that** pumps (48-1, 48-2, 48-3) are provided for supplying the actuators, one pump per actuator, for simultaneously supplying said actuators (42-1, 42-2, 42-3) with an identical flow of hydraulic fluid so as to move the sets (16-1, 16-2, 16-3) of bars (18) simultaneously.

2. A method for manoeuvring a load-transfer device with a moving base according to claim 1, **characterised in that** the simultaneous flow rate of hydraulic fluid is varied so as to vary the speed of travel of the sets of bars.

3. A load-transfer device with a moving base for implementing the method according to claim 1 or 2, comprising at least two sets (16-1, 16-2, 16-3) of bars (18) able to move in translation synchronously in the direction of travel, and able to move in translation successively in the direction opposite to the travel, means (40) for manoeuvring these sets of bars with hydraulic actuators (42-1, 42-2, 42-3), **characterised in that** the manoeuvring means (40) comprises at least one hydraulic actuator (42-1, 42-2, 42-3) per set of bars, a hydraulic unit (44) composed of a single motor (46), one pump (48-1, 48-2, 48-3) per actuator, these actuators being identical cylinders driven synchronously by said motor and a control valve (50) interposed between each actuator and each pump.

4. A load-transfer device with a moving base according to claim 3, **characterised in that** the pumps (48-1, 48-2, 48-3) are coupled to and driven by the same shaft.

5. A load-transfer device with a moving base according to claim 3 or 4, **characterised in that** it comprises end-of-travel raising and lowering means (34), in both directions.

6. A load-transfer device with a moving base according to claim 5, **characterised in that** the end-of-travel raising and lowering means (34) comprises elevator stops (30), secured to each bar (18), and a surface (38) suitable for receiving said elevator stops.

7. A load-transfer device with a moving base according to claim 6, **characterised in that** the stops (36) have a quarter-round or triangular cross-section and the surface (38) is a fixed or rotatable bar.

8. A load-transfer device with a moving base according to one of claims 3 to 7, **characterised in that** it comprises a chassis (12) with beams (14) intended to receive sets (16) of bars (18), the bars (18) in each set being connected by a set (20) of cross-members (22), each bar (18) resting on a stud (26) secured to one beam (14) and on a roller (28) secured to the other beam (14).

9. A load-transfer device with a moving base according to claim 8, **characterised in that** each stud (26) is attached by means of a single fixing point (30) so as to give rise to a possibility of auto-orientation.

10. A load-transfer device with a moving base according to claim 9, **characterised in that** the bars (18) have a cross-section in an inverted V and the studs (26) have a truncated parallelepipedal cross-section.
